# EUROPEAN PATENT APPLICATION

(11) **EP 4 841 333 A1**
(43) Date of publication of application: **18.11.2026**
(21) Application number: 24916923.6
(22) Date of filing: 24.12.2024
(51) Int. Cl.: G02C 13/00, B24B 9/14, B24B 49/12

(54) **METHOD AND APPARATUS FOR MANUFACTURING SPECTACLE LENS**

(30) Priority: 11.01.2024 JP 2024002253
(71) Applicant: Hoya Lens Thailand Ltd., Pathumthani 12130 (TH)
(72) Inventor: OKUURA, Kazuteru, Tokyo 160-8347 (JP)
(74) Representative: Betten & Resch
(86) International application number: PCT/JP2024/045760
(87) International publication number: WO 2025/150421

(57) **Abstract**

[Problem] To provide a method and an apparatus for producing a spectacle lens, by which a state of a lens surface outer edge can be automatically determined.

[Solution] A method for producing a spectacle lens includes: an imaging step of capturing an image of a lens substrate L; and an outer-edge-state determination step of extracting, on the basis of the image obtained in the imaging step, outer edge distance information at a plurality of points on a lens surface outer edge L1a of a lens surface L1 of the lens substrate L, the outer edge distance information including a distance R from a center of a virtual circumcircle Vc circumscribed with the lens surface outer edge L1a to the lens surface outer edge L1a, and determining the shape of the lens surface outer edge L1a on the basis of the outer edge distance information.

## Description

### [Technical Field]

The present invention relates to a method and an apparatus for producing a spectacle lens.

### [Background Art]

Conventionally, a method for producing a spectacle lens by performing various kinds of processing on a lens substrate is known (see, for example, PTL 1).

### [Citation List]

### [Patent Literature]

[PTL 1] Japanese Patent Application Publication No. 2014-85610

### [Summary of Invention]

### [Technical Problem]

In such a manufacturing process for such an eyeglass lens, there are some cases where a state of a lens surface outer edge needs to be checked to confirm the state of the lens substrate. Conventionally, the state of the lens surface outer edge is visually checked by an operator, so that the checking work requires human labor and is a factor that may hinder automation of the manufacturing process. In addition, since the state is determined by personal sensations in the checking work, variations are likely to occur in determination results.

Accordingly, an object of the present invention is to provide a method and an apparatus for producing a spectacle lens, by which a state of a lens surface outer edge can be automatically determined with a simple configuration.

### [Solution to Problem]

An aspect of the method for producing a spectacle lens according to the present invention solves the problems, the method including: an imaging step of capturing an image of a lens substrate; and an outer-edge-state determination step of extracting, on the basis of the image obtained in the imaging step, outer edge distance information at a plurality of points on the lens surface outer edge of the lens surface of the lens substrate, the outer edge distance information including a distance from a center of a virtual circumcircle circumscribed with the lens surface outer edge to the lens surface outer edge, and determining the shape of the lens surface outer edge on the basis of the outer edge distance information.

Another aspect of the method for producing a spectacle lens according to the present invention solves the problems, the method including: an imaging step of capturing an image of a lens substrate; and an outer-edge-state determination step of extracting the lens surface outer edge of the lens surface of the lens substrate on the basis of the image obtained in the imaging step, and determining whether or not to chamfer the outer edge of the lens substrate.

An aspect of an apparatus for producing a spectacle lens according to the present invention solves the problems, the apparatus including: an imaging device that captures an image of a lens substrate; and an outer-edge-state determination unit that extracts, on the basis of the image obtained in the imaging device, outer edge distance information at a plurality of points on the lens surface outer edge of the lens surface of the lens substrate, the outer edge distance information including a distance from a center of a virtual circumcircle circumscribed with the lens surface outer edge to the lens surface outer edge, and determines the shape of the lens surface outer edge on the basis of the outer edge distance information.

Another aspect of an apparatus for producing a spectacle lens according to the present invention solves the problems, the apparatus including: an imaging device that captures an image of a lens substrate; and an outer-edge-state determination unit that extracts the lens surface outer edge of the lens surface of the lens substrate on the basis of the image captured by the imaging device, and determines whether or not to chamfer the outer edge of the lens substrate on the basis of the lens surface outer edge.

### [Advantageous Effects of Invention]

In the present invention, a state of a lens surface outer edge can be automatically determined with a simple configuration.

### [Brief Description of Drawings]

[Fig. 1]

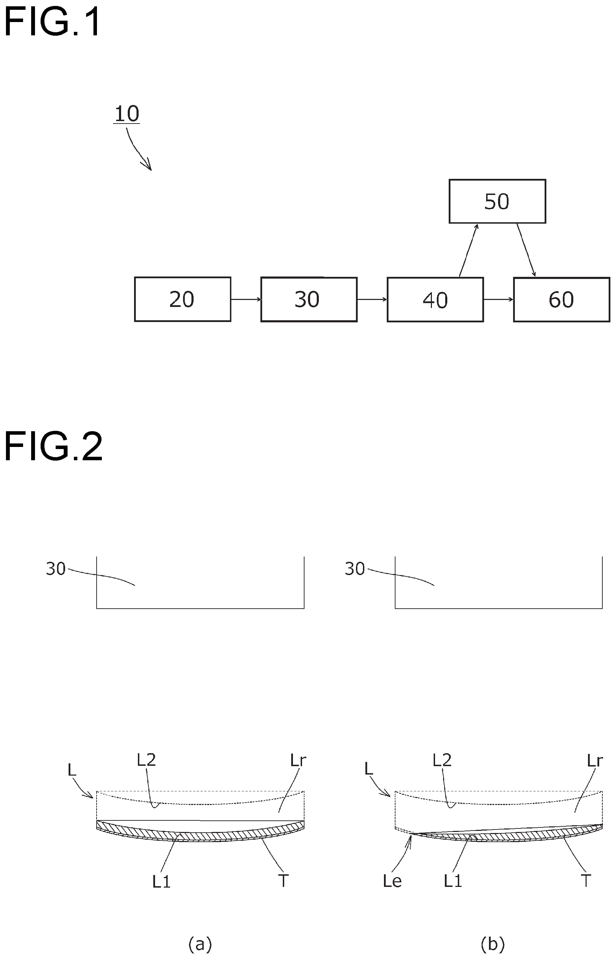

   Fig. 1 is an explanatory drawing showing a schematic configuration of an apparatus for producing a spectacle lens according to an embodiment of the present invention.
[Fig. 2]
   Fig. 2 is an explanatory drawing showing one aspect of an imaging step.
[Fig. 3]

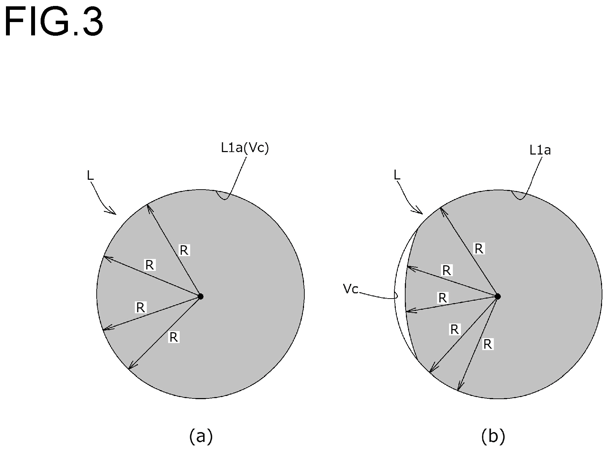

   Fig. 3 is an explanatory drawing showing an outer-edge-state determination step on the basis of an image obtained in the imaging step.

### [Description of Embodiments]

A production apparatus 10 and a production method for a spectacle lens according to an embodiment of the present invention will be described below in accordance with the drawings.

### [Apparatus for Producing Spectacle Lens]

First, the production apparatus 10 for a spectacle lens according to the present embodiment will be described below.

The production apparatus 10 produces a spectacle lens by performing various kinds of processing on a transparent lens substrate L. As shown in Fig. 1, the production apparatus 10 includes: a backside cutting machine 20 for cutting a lens backside L2 on the reverse side of a lens substrate L from a lens surface L1, an imaging device 30 that captures an image of the lens substrate L, an outer-edge-state determination unit 40 that determines the shape of a lens surface outer edge L1a of the lens surface L1 on the basis of the image obtained by the imaging device 30, an outer edge chamfering device 50 that chamfers the outer edge of the lens substrate L, and a polishing device 60 that polishes the lens backside L2.

The components of the production apparatus 10 will be described below in detail.

First, as shown in Fig. 2, the backside cutting machine 20 cuts the lens backside L2 of the lens substrate L, which is formed as a semi-finished lens, into a shape satisfying prescription for the wearer of spectacle lenses.

Reference symbol Lr shown in Fig. 2 denotes a portion on the lens backside L2 of the lens substrate L, the portion being removed by the backside cutting machine 20.

The imaging device 30 is disposed on the downstream side of the backside cutting machine 20, includes an imaging unit such as a CCD camera, and captures an image of the lens substrate L from a position separated in the lens thickness direction as shown in Fig. 2.

In the present embodiment, as shown in Fig. 2, an image of the lens substrate L is captured from the lens backside L2. Conversely, an image of the lens substrate L may be captured from the lens surface L1.

The outer-edge-state determination unit 40 is a unit for determining the shape of the lens surface outer edge L1a of the lens surface L1 of the lens substrate L on the basis of an image obtained by the imaging device 30. In the present embodiment, the outer-edge-state determination unit 40 extracts the lens surface outer edge L1a of the lens surface L1 of the lens substrate L on the basis of an image captured by the imaging device 30 and determines whether or not to chamfer the outer edge of the lens substrate L on the basis of the lens surface outer edge L1a.

The outer-edge-state determination unit 40 is composed of a control terminal such as a personal computer including a storage unit composed of ROM and RAM or the like, an input unit, an output unit, a control unit composed of a CPU or the like, a communication unit, and an auxiliary storage device, in which the control unit is operated according to software deployed in the storage unit.

When the outer-edge-state determination unit 40 determines that the shape of the lens surface outer edge L1a is not circular, the outer edge chamfering device 50 chamfers the outer edge (round edge) of the lens substrate L by cutting or grinding so as to remove an acute-angle corner Le formed at the outer edge of the lens substrate L as shown in Fig. 2(b).

The polishing device 60 is disposed on the downstream side of the outer edge chamfering device 50 and polishes the lens backside L2 of the lens substrate L.

### [Method for Producing Spectacle Lens]

A method for producing a spectacle lens using the production apparatus 10 of the present embodiment will be described below.

The method for producing a spectacle lens includes, from the upstream side, a backside cutting step of cutting the lens backside L2 of the lens substrate L, an imaging step of capturing an image of the lens substrate L, an outer-edge-state determination step of determining the shape of the lens surface outer edge L1a of the lens surface L1 of the lens substrate L on the basis of the image obtained in the imaging step, an outer edge chamfering step of chamfering the outer edge of the lens substrate L, and a polishing step of polishing the lens backside L2.

The steps of the production method will be described below in detail.

First, in the backside cutting step, the backside cutting machine 20 cuts the lens backside L2 of the lens substrate L into a shape that satisfies prescription for the wearer of spectacle glasses.

As shown in Fig. 2, the backside cutting step is executed in a state in which colored tape T is bonded to the lens surface L1 of the lens substrate L.

The colored tape T in the present embodiment is bonded over lens surface L1 in order to protect the lens surface L1 like a convexly curved surface. In the present embodiment, the colored tape T is a translucent blue tape.

The imaging step is executed after the backside cutting step, and as shown in Fig. 2, the imaging device 30 captures an image of the lens substrate L from a position separated in the lens thickness direction.

As shown in Fig. 2, the imaging step is executed with the colored tape T bonded to the lens surface L1 of the lens substrate L.

In the outer-edge-state determination step, the outer-edge-state determination unit 40 determines the shape of the lens surface outer edge L1a on the basis of an image obtained by the imaging device 30. In the present embodiment, the lens surface outer edge L1a of the lens surface L1 of the lens substrate L is extracted on the basis of an image captured by the imaging device 30, and whether or not to chamfer the outer edge of the lens substrate L is determined on the basis of the lens surface outer edge L1a.

Specifically, first in the backside cutting step, the lens substrate L is cut from the lens backside L2. Depending on prescription for the wearer of spectacle lenses, the lens substrate L may be largely cut to the lens surface L1 as shown in Fig. 2(b). In this case, the lens surface outer edge L1a of the lens surface L1, which is circular before cutting, is cut to be non-circular as shown in Fig. 3(b). At this time, the colored tape T is cut along with the lens surface L1, so that the colored tape T is cut into a non-circular shape like the lens surface L1.

Figs. 2(a) and 3(a) show an example in which the lens surface L1 is not cut in the backside cutting step. Figs. 2(b) and 3(b) show an example in which the lens surface L1 is cut in the backside cutting step.

When the lens substrate L is cut to the lens surface L1, as shown in Fig. 2(b), the acute-angle corner (so-called knife edge) Le is formed at a part of the outer edge of the lens substrate L. When the acute-angle corner Le is formed thus, the acute-angle corner Le may cause damage to a polishing pad in the polishing step that is the downstream step of the backside cutting step. Thus, before the polishing step and the like, the outer edge of the lens substrate L is desirably chamfered to remove the acute-angle corner Le.

The outer-edge-state determination step of the present embodiment is executed to solve the above-described problem. The lens surface outer edge L1a of the lens surface L1 of the lens substrate L is extracted on the basis of an image obtained in the imaging step, and whether or not to chamfer the outer edge of the lens substrate L is automatically determined on the basis of the lens surface outer edge L1a.

The determination method in the outer-edge-state determination step will be specifically described below. First, in the outer-edge-state determination step of the present embodiment, the color (blue) of the colored tape T bonded to the lens surface L1 is extracted to be subjected to binarization processing in an image obtained in the imaging step shown in Fig. 3 (in the present embodiment, an image obtained in the imaging step is converted into an RGB image and then is converted to an HSV color coordinate system, and the image is subjected to binarization processing with the hue limited to the blue hue of the colored tape T used in the present embodiment), so that the lens surface outer edge L1a is extracted on the assumption that the edge of the colored tape T is the lens surface outer edge L1a.

Next, as shown in Fig. 3, a virtual circumcircle Vc circumscribed with the lens surface outer edge L1a is set on the basis of the lens surface outer edge L1a extracted in the above-described manner, and then outer edge distance information is extracted. The outer edge distance information includes a distance R from the center of the virtual circumcircle Vc to the lens surface outer edge L1a at a plurality of points on the lens surface outer edge L1a, that is, at the angular positions of predetermined angular pitches (e.g., 1-degree pitches) in the circumferential direction of the lens surface outer edge L1a in the present embodiment.

Thereafter, the standard deviation of the distance R is calculated at the plurality of points on the lens surface outer edge L1a. If the calculated standard deviation is equal to or smaller than a preset threshold value, it is determined that the shape of the lens surface outer edge L1a is circular and chamfering on the lens surface outer edge L1a is not necessary. If the standard deviation is larger than the threshold value, it is determined that the shape of the lens surface outer edge L1a is non-circular and chamfering on the lens surface outer edge L1a is necessary.

In the outer edge chamfering step, when it is determined in the outer-edge-state determination step that the shape of the lens surface outer edge L1a is non-circular and chamfering on the lens surface outer edge L1a is necessary, the outer edge chamfering device 50 chamfers the outer edge of the lens substrate L so as to remove the acute-angle corner Le.

The polishing step is a step of polishing the lens backside L2 of the lens substrate L by the polishing device 60 after the backside cutting step.

The production apparatus 10 and the production method for a spectacle lens according to the present embodiment obtained thus include: the imaging step of capturing an image of the lens substrate L; and the outer-edge-state determination step of extracting, on the basis of the image obtained in the imaging step, outer edge distance information at a plurality of points on the lens surface outer edge L1a of the lens surface L1 of the lens substrate L, the outer edge distance information including the distance R from the center of the virtual circumcircle Vc circumscribed with the lens surface outer edge L1a to the lens surface outer edge L1a, and determining the shape of the lens surface outer edge L1a on the basis of the outer edge distance information. Thus, the shape of the lens surface outer edge L1a can be automatically determined in a satisfactory manner (in the case of the present embodiment, it is determined whether or not the shape of the lens surface outer edge L1a is circular), thereby eliminating the need for visually determining the shape of the lens surface outer edge L1a by an operator. This can reduce the human labor and suppress variations in determination results.

In addition, in the imaging step, an image of the lens substrate L is captured with the colored tape T bonded on the lens surface L1, and in the outer-edge state determination step, the outer edge distance information is extracted on the assumption that the edge of the colored tape T is the lens surface outer edge L1a. Thus, even if the lens substrate L has high transparency (light color), the outer edge distance information can be satisfactorily extracted to accurately determine the shape of the lens surface outer edge L1a.

Furthermore, in the outer-edge-state determination step, the standard deviation of the distance R is calculated at a plurality of points on the lens surface outer edge L1a, and when the calculated standard deviation is equal to or smaller than the preset threshold value, it is determined that the shape of the lens surface outer edge L1a is circular. Thus, whether or not the shape of the lens surface outer edge L1a is circular can be satisfactorily determined on the basis of the outer edge distance information.

The embodiment of the present invention has been described in detail. The present invention is not limited to the embodiment, and various design changes can be made without departing from the present invention set forth in the claims, for example, the configurations of the above-described embodiment and the following modification examples may be combined as necessary to constitute the production apparatus 10 and the method for producing a spectacle lens.

For example, in the above-described embodiment, the lens substrate L is a semi-finished lens, i.e., a semi-finished lens as a partially finished product in which the lens frontside (curved convexly around the center) with a convexly curved surface (facing outward when the spectacles are worn) has a complete shape and the lens backside L2 (curved concavely around the center) is worked into a shape with a concavely curved surface (facing eyeballs when the spectacles are worn) in the backside cutting step so as to satisfy prescription for the wearer of the spectacle lenses. The specific form of the lens substrate L is not limited thereto.

In addition, in the above-described embodiment, an image of the lens substrate L is captured with the colored tape T bonded on the lens surface L1, and in the outer-edge-state determination step, the outer edge distance information is extracted on the assumption that the edge of the colored tape T is the lens surface outer edge L1a. The extraction method of the outer edge distance information is not limited thereto. An image of the lens substrate L may be captured without the colored tape T bonded on the lens surface L1, and the lens surface outer edge L1a of the lens surface L1 may be extracted from the captured image to extract the outer edge distance information.

Although the lens substrate L may have any refractive index, it is preferable that the lens substrate L has a refractive index of 1.5 or more in the present invention.

### [Reference Signs List]

- 10: Production apparatus
- 20: Backside cutting machine
- 30: Imaging device
- 40: Outer-edge-state determination unit
- 50: Outer edge chamfering device
- 60: Polishing device
- L: Lens substrate
- L1: Lens surface
- L1a: Lens surface outer edge
- L2: Lens backside
- T: Colored tape
- Lr: Portion to be removed in backside cutting step
- Le: Acute-angle corner
- Vc: Virtual circumcircle

## Claims

1. A method for producing a spectacle lens, comprising:
an imaging step of capturing an image of a lens substrate; and
an outer-edge-state determination step of extracting, on the basis of the image obtained in the imaging step, outer edge distance information at a plurality of points on a lens surface outer edge of a lens surface of the lens substrate, the outer edge distance information including a distance from a center of a virtual circumcircle circumscribed with the lens surface outer edge to the lens surface outer edge, and determining a shape of the lens surface outer edge on the basis of the outer edge distance information.

2. The method for producing a spectacle lens according to claim 1, wherein, in the outer-edge-state determination step, it is determined whether or not the shape of the lens surface outer edge is circular on the basis of the outer edge distance information.

3. The method for producing a spectacle lens according to claim 2, further comprising, when it is determined in the outer-edge-state determination step that the shape of the lens surface outer edge is not circular, an outer edge chamfering step of chamfering an outer edge of the lens substrate.

4. The method for producing a spectacle lens according to claim 3, further comprising a polishing step of polishing a lens backside of the lens substrate, as a step to be executed after the outer edge chamfering step.

5. The method for producing a spectacle lens according to any of claims 1 to 4, wherein, in the imaging step, an image of the lens substrate is captured with colored tape bonded to the lens surface, and
in the outer-edge-state determination step, the outer edge distance information is extracted on an assumption that an edge of the colored tape is the lens surface outer edge.

6. The method for producing a spectacle lens according to claim 5, further comprising, as a step to be executed before the imaging step, a backside cutting step of cutting the lens backside on a reverse side from the lens surface with the colored tape bonded to the lens surface.

7. The method for producing a spectacle lens according to any of claims 1 to 6, wherein, in the outer-edge-state determination step, when a standard deviation of the distance at the plurality of points on the lens surface outer edge is calculated and the calculated standard deviation is equal to or smaller than a preset threshold value, it is determined that the shape of the lens surface outer edge is circular.

8. A method for producing a spectacle lens, comprising:
an imaging step of capturing an image of a lens substrate; and
an outer-edge-state determination step of extracting a lens surface outer edge of a lens surface of the lens substrate on the basis of the image obtained in the imaging step, and determining whether or not to chamfer an outer edge of the lens substrate on the basis of the lens surface outer edge.

9. An apparatus for producing a spectacle lens, comprising:
an imaging device that captures an image of a lens substrate; and
an outer-edge-state determination unit that extracts, on the basis of the image obtained in the imaging device, outer edge distance information at a plurality of points on a lens surface outer edge of the lens substrate, the outer edge distance information including a distance from a center of a virtual circumcircle circumscribed with the lens surface outer edge to the lens surface outer edge, and determines a shape of the lens surface outer edge on the basis of the outer edge distance information.

10. An apparatus for producing a spectacle lens, comprising:
an imaging device that captures an image of a lens substrate; and
an outer-edge-state determination unit that extracts a lens surface outer edge of a lens surface of the lens substrate on the basis of the image captured by the imaging device, and determines whether or not to chamfer an outer edge of the lens substrate on the basis of the lens surface outer edge.
